# EUROPÄISCHE PATENTANMELDUNG

(11) **EP 3 838 791 A1**
(43) Veröffentlichungstag der Anmeldung: **23.06.2021**
(21) Anmeldenummer: 20214965.4
(22) Anmeldetag: 17.12.2020
(51) Int. Cl.: B65D 71/00, B60P 7/08, B65D 19/44

(54) **PACKVORRICHTUNG UND VERFAHREN ZU EINER VERPACKUNG VON ZUMINDEST EINER AUF EINER PALETTE ANGEORDNETEN WARE FÜR EINEN TRANSPORT DER WARE**

(30) Priorität: 20.12.2019 DE 102019135566
(71) Anmelder: Walz MC Packaging GmbH, 88515 Langenenslingen-Ittenhausen (DE)
(72) Erfinder: Walz, Bernd, 88515 Langenenslingen-Ittenhausen (DE)
(74) Vertreter: Daub, Thomas

(57) **Zusammenfassung**

Die Erfindung geht aus von einer Packvorrichtung (10) zu einer Verpackung von zumindest einer auf einer Palette (12) angeordneten Ware (14), insbesondere Kommissionierware, für einen Transport der Ware (14), mit zumindest einem Abdeckelement (16), welches zu einer zumindest teilweisen Abdeckung zumindest einer Oberseite (18) der Ware (14) und zu einer Befestigung an der Palette (12) vorgesehen ist.

Um eine Sicherheit und Flexibilität zu steigern wird vorgeschlagen, dass das Abdeckelement (16) wesentlich flexibel und dazu vorgesehen ist, zumindest eine Horizontalseite (20) der Ware (14) zumindest teilweise abzudecken.

## Beschreibung

### Stand der Technik

Die Erfindung betrifft eine Packvorrichtung nach dem Oberbegriff des Anspruchs 1 und ein Verfahren zu einer Verpackung von zumindest einer auf einer Palette angeordneten Ware für einen Transport der Ware gemäß dem Oberbegriff des Anspruchs 15.

Es ist bereits vorgeschlagen worden, Kommissionierwaren mittels einer Palette, einer Kartonplatte und mehreren Packriemen zu verpacken. Die Kartonplatte weist eine zu einer Länge und Breite der Palette identische Länge und Breite auf und deckt eine Oberseite der Kommissionierwaren vollständig ab. Die Packriemen verlaufen über eine Oberseite der Kartonplatte und über eine Unterseite der Palette und werden zu einer Befestigung der Kartonplatte an der Palette unter Spannung gehalten. Hierbei muss abhängig von den Maßen der verwendeten Palette eine entsprechende Kartonplatte verwendet werden.

Die Aufgabe der Erfindung besteht insbesondere darin, eine gattungsgemäße Packvorrichtung mit verbesserten Eigenschaften hinsichtlich einer Sicherheit und Flexibilität bereitzustellen. Die Aufgabe wird erfindungsgemäß durch die Merkmale der Patentansprüche 1 und 15 gelöst, während vorteilhafte Ausgestaltungen und Weiterbildungen der Erfindung den Unteransprüchen entnommen werden können.

### Vorteile der Erfindung

Die Erfindung geht aus von einer Packvorrichtung zu einer Verpackung von zumindest einer auf einer Palette angeordneten Ware, insbesondere Kommissionierware, für einen Transport der Ware, mit zumindest einem Abdeckelement, welches zu einer zumindest teilweisen und vorzugsweise vollständigen Abdeckung zumindest einer Oberseite der Ware und zu einer Befestigung an der Palette vorgesehen ist.

Es wird vorgeschlagen, dass das Abdeckelement wesentlich flexibel und dazu vorgesehen ist, zumindest eine Horizontalseite und vorzugsweise sämtliche Horizontalseiten der Ware zumindest teilweise abzudecken.

Durch eine derartige Ausgestaltung können insbesondere eine Sicherheit und eine Flexibilität erhöht werden. Vorteilhaft kann eine von dem Abdeckelement abgedeckte Oberfläche der Ware erhöht werden. Insbesondere kann ein seitliches Kippen der Ware, beispielsweise bei einem Bremsen und/oder Beschleunigen eines Lieferfahrzeugs, vermieden werden. Vorzugsweise kann ein Einfluss einer Witterung auf die Ware reduziert werden. Insbesondere kann die Horizontalseite zumindest teilweise vor Regen und/oder Schnee und/oder Hagel geschützt werden. Insbesondere kann auch bei einer Verwendung von Waren, welche sich bezüglich ihrer Höhen voneinander unterscheiden, eine sichere Verpackung der Waren gewährleistet werden.

Die Palette ist bevorzugt als eine standardisierte Palette ausgebildet. Beispielsweise könnte die Palette als eine Europoolpalette oder Industriepalette oder als eine andere, dem Fachmann bekannte und beispielsweise in Amerika oder Asien verwendete standardisierte Palette ausgebildet sein.

Bevorzugt ist die Ware als ein Behälter, welcher dazu vorgesehen ist, zumindest ein Gut, insbesondere Transportgut, aufzunehmen, ausgebildet. Beispielsweise könnte die Ware als ein Fass und/oder eine Kiste und/oder ein Sack und/oder ein anderer, dem Fachmann bekannter, Behälter ausgebildet sein. Vorteilhaft weist die Ware standardisierte Maße auf. Alternativ könnte die Ware als ein einzelnes Gut, insbesondere Transportgut, beispielsweise als ein Gerät, ausgebildet sein.

Die Packvorrichtung kann mehrere gleichartig ausgebildete oder zumindest teilweise verschiedenartig ausgestaltete Abdeckelemente und/oder zumindest eine weitere Einheit und/oder zumindest ein weiteres Element umfassen. Denkbar wäre, dass die Packvorrichtung die Palette aufweist. Ferner wäre denkbar, dass die Packvorrichtung eine zu einer Anzahl an Waren identische Anzahl an Abdeckelementen aufweist. Bevorzugt weist die Packvorrichtung genau ein Abdeckelement auf. Hierdurch können Materialkosten gesenkt und ein Verpacken der Ware vereinfacht werden.

Denkbar wäre, dass das Abdeckelement unmittelbar an der Palette befestigt ist. Beispielsweise könnte das Abdeckelement zumindest einen Vorsprung der Palette umgreifen, alternativ könnte der Vorsprung in zumindest eine Ausnehmung des Abdeckelements eingreifen. Bevorzugt ist das Abdeckelement mittelbar an der Palette befestigt.

Die Oberseite verläuft bevorzugt senkrecht zu einer Höhenrichtung. Insbesondere kontaktiert das Abdeckelement die Oberseite vollständig. Die Horizontalseite der Ware verläuft bevorzugt parallel zu der Höhenrichtung. Insbesondere können die Horizontalseite und die Oberseite uneben sein. Vorzugsweise ist zumindest die Oberseite eben.

Ein wesentlich flexibles Element ist bevorzugt ein Element, welches zumindest biegsam und insbesondere faltbar und/oder dehnbar und/oder aufrollbar ist. Vorzugsweise ist das wesentlich flexible Element auf eine nicht zerstörerische Weise biegsam und/oder faltbar und/oder dehnbar und/oder aufrollbar. Insbesondere ist das wesentlich flexible Element elastisch verformbar, alternativ könnte das wesentlich flexible Element plastisch verformbar sein. Beispielsweise könnte das wesentlich flexible Element zumindest ein Elastomer und/oder Polymer und/oder Metall aufweisen. Vorteilhaft ist ein beispielhafter, um 10 cm über einer Auflagefläche hervorstehender Teilbereich des wesentlich flexiblen Elements um mindestens 5 cm, vorteilhaft mindestens 7 cm und besonders vorteilhaft mindestens 9 cm senkrecht zu der Auflagefläche biegbar.

Unter "vorgesehen" soll speziell ausgelegt und/oder ausgestattet verstanden werden. Darunter, dass ein Objekt zu einer bestimmten Funktion vorgesehen ist, soll verstanden werden, dass das Objekt diese bestimmte Funktion in zumindest einem Anwendungs- und/oder Betriebszustand erfüllt und/oder ausführt.

Denkbar wäre, dass das Abdeckelement dazu vorgesehen ist, zwei gegenüberliegende Horizontalseiten der Ware zumindest teilweise abzudecken. Insbesondere könnte das Abdeckelement an gegenüberliegenden Seiten der Palette an der Palette befestigt sein. Um eine Sicherheit weiter zu erhöhen, wird vorgeschlagen, dass das Abdeckelement dazu vorgesehen ist, die Ware bei einer Betrachtung entlang einer Höhenrichtung vollständig zu umgeben. Hierdurch kann insbesondere ein Umkippen der Ware entlang jeglicher Horizontalrichtungen vermieden werden. Insbesondere kann eine einfache und gleichmäßige Verpackung der Ware erreicht werden.

Ferner wird vorgeschlagen, dass das Abdeckelement flach ausbreitbar ist. Ein flach ausbreitbares Element ist bevorzugt ein Element, welches in einem ausgebreiteten Zustand eine Länge und eine Breite aufweist, welche zumindest einem Fünffachen, vorteilhaft zumindest einem Zehnfachen und besonders vorteilhaft zumindest einem Fünfzehnfachen einer Dicke des Elements entsprechen. Unter einem "ausgebreiteten Zustand" soll insbesondere ein Zustand des Elements verstanden werden, in welchem das Element frei von Falten und/oder Knicken und/oder Biegungen ist. Hierdurch kann insbesondere eine einfache Lagerung und/oder ein einfacher Transport des Abdeckelements erreicht werden. Vorteilhaft kann das Abdeckelement zu einem Verpacken der Ware flach auf die Oberseite der Ware gelegt und anschließend an der Horizontalseite der Ware entlang gezogen werden. Alternativ könnte das Abdeckelement schalenförmig und zu einem Überstülpen über die Ware vorgesehen sein.

Denkbar wäre, dass das Abdeckelement in dem ausgebreiteten Zustand eine Länge und Breite aufweist, welche kleiner als eine Länge und Breite der Palette sind. Um eine Sicherheit weiter zu steigern, wird vorgeschlagen, dass das Abdeckelement in einem ausgebreiteten Zustand eine Länge aufweist, die zumindest 110 %, insbesondere zumindest 130 % und bevorzugt zumindest 150 % einer Länge der Palette entspricht, und eine Breite aufweist, die zumindest 110 %, insbesondere zumindest 130 % und bevorzugt zumindest 150 % einer Breite der Palette entspricht. Hierdurch kann insbesondere die zumindest teilweise Abdeckung der Horizontalseite der Ware auch bei voller Beladung der Palette gewährleistet werden.

Zudem wird vorgeschlagen, dass das Abdeckelement als eine Folie, insbesondere als eine Membranfolie, ausgebildet ist. Denkbar wäre, dass das Abdeckelement opak ist, vorzugsweise ist das Abdeckelement transparent. Eine Membranfolie ist bevorzugt eine Folie, welche für Flüssigkeiten undurchlässig und für Licht und/oder Luft durchlässig ist. Insbesondere ist das Abdeckelement frei von Metallen. Vorzugsweise besteht das Abdeckelement aus einem Polymer, beispielsweise PTFE oder ETFE. Insbesondere ist das Abdeckelement zu einem Entpacken der Ware zerstörbar, insbesondere zerreißbar und/oder zerschneidbar. Hierdurch können insbesondere Herstellungskosten reduziert und eine Sicherheit weiter erhöht werden. Vorteilhaft kann das Abdeckelement auf eine einfache und günstige Weise hergestellt werden. Besonders vorteilhaft kann das Abdeckelement zu einem Entpacken der Ware und/oder zu einem Ersetzen eines beschädigten Abdeckelements auf einfache Weise entfernt werden. Insbesondere können optische Überprüfungen der Ware, beispielsweise zu einer Detektion von Beschädigungen der Ware, in einem verpackten Zustand der Ware durchgeführt werden.

Um eine Wiederverwendbarkeit des Abdeckelements zu ermöglichen, wird vorgeschlagen, dass das Abdeckelement als ein flächenförmiges textiles Gebilde ausgebildet ist. Ein flächiges textiles Gebilde ist bevorzugt eine Struktur, welche aus einer Vielzahl von Fasern, insbesondere Fasersträngen, gebildet ist, welche nach zumindest einem vordefinierten, mattenförmigen Muster zusammengefasst sind. Beispielhafte flächenförmige textile Gebilde umfassen Gewebe und/oder Gewirke und/oder Gestricke und/oder Geflechte und/oder Nähgewirke und/oder Vliesstoff und/oder Filz. Beispielsweise könnte das Abdeckelement Naturfasern wie beispielsweise Baumwolle, Hanf und/oder Leinen und/oder Chemiefasern wie beispielsweise Polyester, Copolymer und/oder PVC aufweisen. Vorzugsweise ist das Abdeckelement zu einem erhöhten Witterungsschutz imprägniert und/oder beschichtet. Insbesondere ist das Abdeckelement frei von Maschen. Vorteilhaft ist das Abdeckelement zu einem Entpacken der Ware zerstörungsfrei von der Palette lösbar. Hierdurch kann insbesondere ein wiederholtes Verpacken und Entpacken der Ware mit demselben Abdeckelement ermöglicht werden. Vorstellbar wäre auch, dass das Abdeckelement als ein Netz ausgebildet ist. Beispielsweise könnte das Abdeckelement ovale und/oder viereckige Maschen aufweisen.

Darüber hinaus wird vorgeschlagen, dass das Abdeckelement dazu vorgesehen ist, sich entlang einer Höhenrichtung über zumindest 20 %, vorteilhaft zumindest 30 %, besonders vorteilhaft zumindest 40 % und bevorzugt zumindest 50 % der Horizontalseite zu erstrecken. Vorzugsweise ist das Abdeckelement dazu vorgesehen, sich entlang einer Höhenrichtung über zumindest 20 %, vorteilhaft zumindest 30 %, besonders vorteilhaft zumindest 40 % und bevorzugt zumindest 50 % einer Höhe einer standardisierten Ware, beispielsweise eines ISO-Containers und/oder IBC-Containers, zu erstrecken. Möglich wäre, dass das Abdeckelement dazu vorgesehen ist, sich an jeglichen Stellen der Horizontalseite entlang der Höhenrichtung im Wesentlichen gleich weit über die Horizontalseite zu erstrecken. Insbesondere ist das Abdeckelement dazu vorgesehen, sich an verschiedenen Stellen der Horizontalseite entlang der Höhenrichtung unterschiedlich weit über die Horizontalseite zu erstrecken. Hierdurch können insbesondere eine Flexibilität und Sicherheit weiter gesteigert werden. Vorteilhaft kann ein seitliches Umkippen der Ware auch bei einer Verwendung von Waren mit zueinander unterschiedlichen Höhen erreicht werden. Besonders vorteilhaft kann ein Reißen des sich über die Horizontalseite erstreckenden Teilbereichs des Abdeckelements vermieden werden.

Vorteilhaft weist das Abdeckelement zumindest ein Aufnahmeelement auf, welches zur Aufnahme eines Befestigungselements zur Befestigung des Abdeckelements an der Palette vorgesehen ist. Möglich wäre, dass das Abdeckelement genau ein Aufnahmeelement oder eine Vielzahl von benachbart zueinander angeordneten Aufnahmeelementen aufweist. Vorzugsweise weist das Abdeckelement zumindest zwei und besonders bevorzugt vier Aufnahmeelemente auf, wobei die Aufnahmeelemente paarweise gegenüberliegend an Rändern des Abdeckelements angeordnet sind. Denkbar wäre, dass das Aufnahmeelement an dem Abdeckelement befestigt ist, beispielsweise könnte das Aufnahmeelement an ein restliches Aufnahmeelement angenäht und/oder angeklammert und/oder angeheftet und/oder angesteckt sein. Vorzugsweise sind das Aufnahmeelement und das Abdeckelement miteinander einstückig ausgebildet. Unter "einstückig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Beispielsweise könnte das Aufnahmeelement als ein Aufnahmering und/oder eine Aufnahmeklammer und/oder eine Aufnahmeschlaufe und/oder eine Aufnahmenut ausgebildet sein. Hierdurch kann insbesondere eine Befestigung des Abdeckelements an der Palette vereinfacht werden. Vorteilhaft kann auf separate Aufnahmeelemente zur Befestigung des Abdeckelements an der Palette verzichtet werden.

Weiterhin wird vorgeschlagen, dass das Aufnahmeelement als eine Lasche ausgebildet ist. Eine Lasche ist bevorzugt ein Element, welches bei einer Betrachtung des Elements entlang zumindest einer Richtung eine geschlossene Form aufweist und einen Durchlass entlang der Richtung definiert. Insbesondere ist das Element bei der Betrachtung im Wesentlichen ringförmig. Denkbar wäre, dass das Aufnahmeelement als eine Öse ausgebildet ist, insbesondere könnte die Packvorrichtung eine Mehrzahl von Aufnahmeelementen aufweisen, welche vorzugsweise an Eckbereichen des Abdeckelements angeordnet sind.

Vorteilhaft ist das Aufnahmeelement als ein längliches Element ausgebildet. Ein längliches Element ist bevorzugt ein Element, für welches ein gedachter kleinstmöglicher Quader, welcher das Element gerade noch aufnimmt, eine Länge aufweist, welche zumindest einem Fünffachen, vorteilhaft zumindest einem Zehnfachen und besonders vorteilhaft zumindest einem Fünfzehnfachen einer Breite und Höhe des Quaders entspricht. Insbesondere definiert das Aufnahmeelement eine Durchlassrichtung für das Befestigungselement, wobei die Durchlassrichtung identisch zu einer Längsrichtung des Aufnahmeelements ist. Vorteilhaft ist das Aufnahmeelement als ein aufgerollter Rand des Abdeckelements ausgebildet, welcher vorzugsweise mittels zumindest einer Naht und/oder mittels zumindest einer Schweißverbindung fixiert ist. Hierdurch kann insbesondere eine einfache und flexible Verpackung der Ware erreicht werden. Vorteilhaft kann das Abdeckelement mittels gängiger Packriemen und/oder Spanngurte an der Palette befestigt werden. Besonders vorteilhaft kann eine Verpackung der Ware unabhängig von einer Höhe der Ware erreicht werden.

Vorzugsweise weist das Aufnahmeelement eine Längserstreckung von zumindest 110 %, insbesondere zumindest 130 % und vorteilhaft zumindest 150 % einer Länge oder Breite der Palette auf. Insbesondere weist das Aufnahmeelement eine Längserstreckung auf, welche in dem ausgebreiteten Zustand im Wesentlichen einer Länge oder Breite des Abdeckelements entspricht. Vorzugsweise bildet das Aufnahmeelement einen Rand des Abdeckelements vollständig aus, besonders bevorzugt weist das Abdeckelement vier paarweise gegenüberliegende Ränder auf, welche jeweils durch ein Aufnahmeelement gebildet sind. Hierdurch kann insbesondere eine Stabilität erhöht werden. Vorteilhaft kann eine auf das Abdeckelement wirkende Spannkraft gleichmäßig verteilt werden.

Zudem wird vorgeschlagen, dass die Packvorrichtung das Befestigungselement aufweist, welches als ein wesentlich flexibles, längliches Element ausgebildet ist. Denkbar wäre, dass das Befestigungselement als eine Schnur und/oder ein Seil und/oder ein Riemen und/oder ein Gurt ausgebildet ist. Insbesondere weist das Befestigungselement zwei Enden auf, welche insbesondere mittels einer Schnappverbindung und/oder einer Steckverbindung und/oder einer Schraubverbindung und/oder mittels zumindest eines Knotens miteinander verbindbar sind. Hierdurch kann insbesondere ein einfaches Befestigen der Ware an der Palette erreicht werden. Vorteilhaft kann das Abdeckelement auf einfache Weise zu einer Verpackung der Ware festgezurrt werden.

Vorteilhaft ist das Befestigungselement als ein Spanngurt ausgebildet. Ein Spanngurt ist bevorzugt ein wesentlich flexibles, längliches Befestigungselement, welches zumindest ein Spannschloss aufweist, mittels welchem die Enden des Spanngurts verbindbar sind. Insbesondere ist der Spanngurt mittels des Spannschlosses zur Befestigung des Abdeckelements an der Palette spannbar. Hierdurch kann insbesondere ein flexibles Befestigen der Ware an der Palette erreicht werden. Vorteilhaft kann unabhängig von einer Höhe der Ware und/oder einer Breite und Länge der Palette die Ware an der Palette befestigt werden.

Ferner wird eine Verpackung vorgeschlagen, welche die Packvorrichtung aufweist. Vorzugsweise weist die Verpackung weitere Elemente auf, welche zusätzliche, von einem Verpacken der Ware verschiedene, Funktionen bereitstellen. Beispielsweise könnte die Verpackung zumindest ein Identifizierungselement, beispielsweise einen QR-Code und/oder ein RFID-Tag und/oder einen Kennzeichenaufkleber, und/oder zumindest ein Warnelement, beispielsweise einen Warnaufkleber und/oder eine Farbmarkierung, und/oder zumindest ein Lokalisierungselement, beispielsweise einen GPS-Sender, aufweisen. Hierdurch können insbesondere eine Sicherheit und eine Flexibilität erhöht werden.

Weiterhin wird ein Produkt vorgeschlagen, welches die Packvorrichtung, die Palette und die mittels der Packvorrichtung verpackte Ware aufweist. Insbesondere ist das Produkt als Ganzes käuflich erwerbbar. Hierdurch können insbesondere eine Sicherheit und eine Flexibilität erhöht werden.

Die Erfindung geht weiterhin aus von einem Verfahren zu einer Verpackung von zumindest einer auf einer Palette angeordneten Ware, insbesondere Kommissionierware, für einen Transport der Ware, insbesondere mit der Packvorrichtung, mit zumindest einem Abdeckelement, mittels welchem zumindest eine Oberseite der Ware zumindest teilweise abgedeckt und welches an der Palette befestigt wird.

Es wird vorgeschlagen, dass das Abdeckelement wesentlich flexibel ist und mittels des Abdeckelements zumindest eine Horizontalseite der Ware zumindest teilweise abgedeckt wird. Hierdurch können insbesondere eine Sicherheit und eine Flexibilität erhöht werden.

Die Packvorrichtung soll hierbei nicht auf die oben beschriebene Anwendung und Ausführungsform beschränkt sein. Insbesondere kann die Packvorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Produkt mit einer Verpackung, welche eine Packvorrichtung aufweist, in einer Schrägansicht,
- Fig. 2: ein Abdeckelement der Packvorrichtung in einem ausgebreiteten Zustand in einer Betrachtung entlang einer Höhenrichtung und
- Fig. 3: ein schematisches Verlaufsdiagramm eines Verfahrens zu einer Verpackung einer auf einer Palette angeordneten Ware für einen Transport der Ware mit der Packvorrichtung.

### Beschreibung des Ausführungsbeispiels

Von mehrfach vorhandenen Objekten ist in den Figuren jeweils lediglich eines mit einem Bezugszeichen versehen.

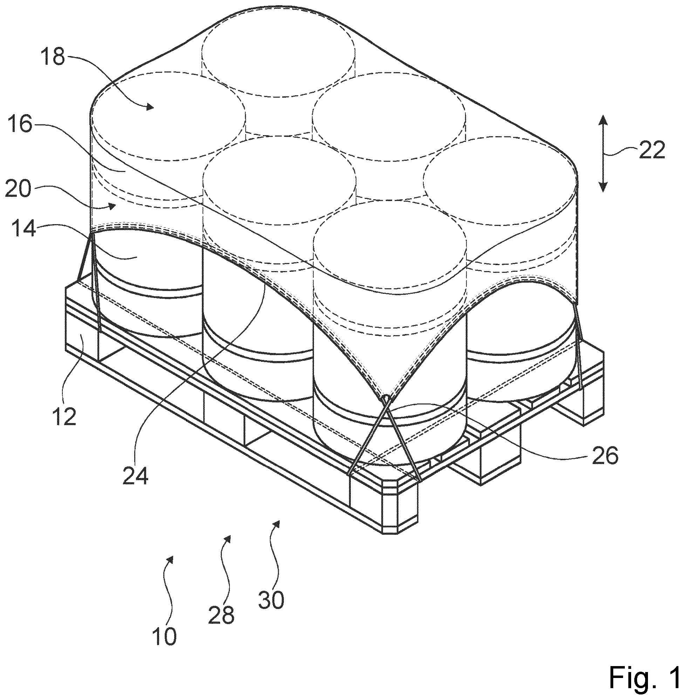

Figur 1 zeigt ein Produkt 30. Das Produkt 30 weist eine Palette 12 auf. Die Palette 12 ist als eine standardisierte Palette ausgebildet. Die Palette 12 ist als eine Europoolpalette ausgebildet. Alternativ könnte die Palette 12 als eine andere, dem Fachmann bekannte, standardisierte Palette ausgebildet sein. Das Produkt 30 weist Waren 14 auf. Die Waren 14 sind auf der Palette 12 angeordnet. Die Waren 14 sind an der Palette 12 befestigt. Die Waren 14 weisen eine Oberseite 18 auf. Die Waren 14 weisen vier Horizontalseiten 20 auf, von denen im Folgenden lediglich eine Horizontalseite 20 beschrieben wird. Die Waren 14 sind zueinander identisch, weshalb im Folgenden lediglich eine der Waren 14 beschrieben wird. Alternativ könnte das Produkt 30 voneinander verschiedene Waren aufweisen, welche insbesondere voneinander unterschiedliche Höhen aufweisen könnten. Die Ware 14 ist als eine Kommissionierware ausgebildet. Die Ware 14 ist mit Transportgut gefüllt. Die Ware 14 weist Standardmaße auf. Die Ware 14 ist als ein standardisiertes Fass ausgebildet. Alternativ könnte die Ware 14 als ein ISO-Container oder ein IBC-Container ausgebildet sein.

Das Produkt 30 weist eine Verpackung 28 auf. Die Verpackung 28 dient einer Vereinfachung eines Transports des Produkts 30. Die Verpackung 28 weist eine Packvorrichtung 10 auf. Die Packvorrichtung 10 dient einer Verpackung der Ware 14 für einen Transport der Ware 14. Die Packvorrichtung 10 weist ein Abdeckelement 16 auf. Das Abdeckelement 16 dient einer Abdeckung der Oberseite 18. Das Abdeckelement 16 ist an der Palette 12 befestigt. Das Abdeckelement 16 ist wesentlich flexibel. Das Abdeckelement 16 deckt sämtliche der Horizontalseiten 20 teilweise ab.

Das Abdeckelement 16 ist als eine Folie ausgebildet. Das Abdeckelement 16 ist als eine Membranfolie ausgebildet. Das Abdeckelement 16 besteht aus PTFE. Alternativ könnte das Abdeckelement 16 als ein flächenförmiges textiles Gebilde ausgebildet sein. Das Abdeckelement 16 erstreckt sich entlang einer Höhenrichtung 22 teilweise über die Horizontalseite 20. Das Abdeckelement 16 erstreckt sich entlang der Höhenrichtung 22 bogenförmig über die Horizontalseite 20. Das Abdeckelement 16 erstreckt sich entlang der Höhenrichtung 22 über minimal etwa 18 % der Horizontalseite 20. Das Abdeckelement 16 erstreckt sich entlang der Höhenrichtung 22 über maximal etwa 45 % der Horizontalseite 20. Das Abdeckelement 16 weist vier Aufnahmeelemente 24 auf. Die Aufnahmeelemente 24 sind paarweise gegenüberliegend angeordnet. Die Aufnahmeelemente 24 sind bezüglich einer Funktionsweise zueinander identisch ausgebildet, weshalb im Folgenden lediglich ein Aufnahmeelement 24 beschrieben wird. Das Aufnahmeelement 24 dient einer Aufnahme eines Befestigungselements 26 zur Befestigung des Abdeckelements 16 an der Palette 12. Das Aufnahmeelement 24 ist als eine Lasche ausgebildet.

Das Aufnahmeelement 24 ist als ein längliches Element ausgebildet. Das Aufnahmeelement 24 weist eine Längserstreckung von etwa 130 % einer Länge der Palette 12 auf. Das Aufnahmeelement 24 ist als ein aufgerollter Rand des Abdeckelements 16 ausgebildet. Das Aufnahmeelement 24 ist durch ein Aufrollen und Festschweißen des Rands ausgebildet. Alternativ könnte das Aufnahmeelement 24 durch ein Aufrollen und Festnähen des Rands ausgebildet sein.

Die Packvorrichtung 10 weist das Befestigungselement 26 auf. Das Befestigungselement 26 dient einer Befestigung des Abdeckelements 16 an der Palette 12. Das Befestigungselement 26 ist als ein wesentlich flexibles, längliches Element ausgebildet. Das Befestigungselement 26 ist als ein Spanngurt ausgebildet. Alternativ könnte das Befestigungselement 26 als ein Packriemen oder ein Seil ausgebildet sein. Das Befestigungselement 26 weist zwei Enden (nicht dargestellt) auf. Die Enden sind mittels eines Spannschlosses (nicht dargestellt) miteinander verbindbar. Das Befestigungselement 26 ist mittels des Spannschlosses spannbar. Das Befestigungselement 26 ist durch das Aufnahmeelement 24 geführt. Das Befestigungselement 26 ist über eine Unterseite der Palette 12 geführt. Das Abdeckelement 16 ist mittels des Befestigungselements 26 an der Palette 12 befestigt. Das Befestigungselement 26 befindet sich in einem gespannten Zustand.

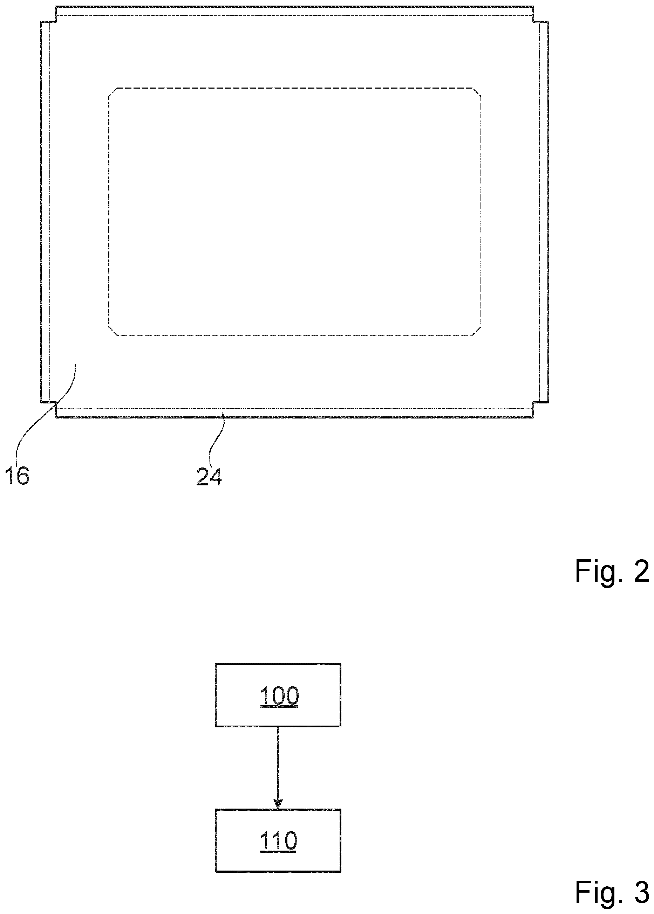

Das Abdeckelement 16 ist flach ausbreitbar. Figur 2 zeigt das Abdeckelement 16 in einem ausgebreiteten Zustand bei einer Betrachtung entlang der Höhenrichtung 22. Das Abdeckelement 16 ist oberhalb der Palette 12 angeordnet. Ein Umriss der Palette 12 ist gestrichelt dargestellt. Das Abdeckelement 16 ist oberhalb der Ware 14 angeordnet. Das Abdeckelement 16 umgibt die Ware 14 bei einer Betrachtung entlang der Höhenrichtung 22 vollständig. Das Abdeckelement 16 weist in dem ausgebreiteten Zustand eine Länge auf, die etwa 130 % einer Länge der Palette 12 entspricht. Das Abdeckelement 16 weist in dem ausgebreiteten Zustand eine Breite auf, die etwa 170 % einer Breite der Palette 12 entspricht.

Figur 3 zeigt ein schematisches Verlaufsdiagramm eines Verfahrens zu einer Verpackung der auf der Palette 12 angeordneten Ware 14, für einen Transport der Ware 14, mit der Packvorrichtung 10. In einem Auflageschritt 100 wird das Abdeckelement 16 in dem ausgebreiteten Zustand auf die Oberseite 18 aufgelegt. Im Anschluss an den Auflageschritt 100 ist das Abdeckelement 16 wie in Figur 2 dargestellt angeordnet.

In einem Befestigungsschritt 110 wird das Abdeckelement 16 zunächst über die Horizontalseiten 20 gezogen. Im Anschluss an das Ziehen des Abdeckelements 16 wird das Befestigungselement 26 durch das Aufnahmeelement 24 geführt. Die Enden des Befestigungselements 26 befinden sich in einem gelösten Zustand. Im Anschluss an das Führen des Befestigungselements 26 durch das Aufnahmeelement 24 wird das Befestigungselement 26 über der Unterseite der Palette 12 geführt. Im Anschluss an das Führen des Befestigungselements 26 über die Unterseite der Palette 12 werden die Enden des Befestigungselements 26 verbunden und das Befestigungselement 26 gespannt. Der Befestigungsschritt 110 folgt auf den Auflageschritt 100. Im Anschluss an den Befestigungsschritt 110 ist das Abdeckelement 16 wie in Figur 1 dargestellt angeordnet.

### Bezugszeichen

- 10: Packvorrichtung
- 12: Palette
- 14: Ware
- 16: Abdeckelement
- 18: Oberseite
- 20: Horizontalseite
- 22: Höhenrichtung
- 24: Aufnahmeelement
- 26: Befestigungselement
- 28: Verpackung
- 30: Produkt
- 100: Auflageschritt
- 110: Befestigungsschritt

## Patentansprüche

1. Packvorrichtung (10) zu einer Verpackung von zumindest einer auf einer Palette (12) angeordneten Ware (14), insbesondere Kommissionierware, für einen Transport der Ware (14), mit zumindest einem Abdeckelement (16), welches zu einer zumindest teilweisen Abdeckung zumindest einer Oberseite (18) der Ware (14) und zu einer Befestigung an der Palette (12) vorgesehen ist, **dadurch gekennzeichnet, dass** das Abdeckelement (16) wesentlich flexibel und dazu vorgesehen ist, zumindest eine Horizontalseite (20) der Ware (14) zumindest teilweise abzudecken.

2. Packvorrichtung (10) nach Anspruch 1, **dadurch gekennzeichnet, dass** das Abdeckelement (16) dazu vorgesehen ist, die Ware (14) bei einer Betrachtung entlang einer Höhenrichtung (22) vollständig zu umgeben.

3. Packvorrichtung (10) nach Anspruch 1 oder 2, **dadurch gekennzeichnet, dass** das Abdeckelement (16) flach ausbreitbar ist.

4. Packvorrichtung (10) nach Anspruch 3, **dadurch gekennzeichnet, dass** das Abdeckelement (16) in einem ausgebreiteten Zustand eine Länge aufweist, die zumindest 110 % einer Länge der Palette (12) entspricht, und eine Breite aufweist, die zumindest 110 % einer Breite der Palette (12) entspricht.

5. Packvorrichtung (10) nach einem der vorhergehenden Ansprüche, **dadurch gekennzeichnet, dass** das Abdeckelement (16) als eine Folie ausgebildet ist.

6. Packvorrichtung (10) nach einem der Ansprüche 1 bis 4, **dadurch gekennzeichnet, dass** das Abdeckelement (16) als ein flächenförmiges textiles Gebilde ausgebildet ist.

7. Packvorrichtung (10) nach einem der vorhergehenden Ansprüche, **dadurch gekennzeichnet, dass** das Abdeckelement (16) dazu vorgesehen ist, sich entlang einer Höhenrichtung (22) über zumindest 20 % der Horizontalseite (20) zu erstrecken.

8. Packvorrichtung (10) nach einem der vorhergehenden Ansprüche, **dadurch gekennzeichnet, dass** das Abdeckelement (16) zumindest ein Aufnahmeelement (24) aufweist, welches zur Aufnahme eines Befestigungselements (26) zur Befestigung des Abdeckelements (16) an der Palette (12) vorgesehen ist.

9. Packvorrichtung (10) nach Anspruch 8, **dadurch gekennzeichnet, dass** das Aufnahmeelement (24) als eine Lasche ausgebildet ist.

10. Packvorrichtung (10) nach Anspruch 9, **dadurch gekennzeichnet, dass** das Aufnahmeelement (24) eine Längserstreckung von zumindest 110 % einer Länge oder Breite der Palette (12) aufweist.

11. Packvorrichtung (10) nach einem der Ansprüche 8 bis 10, **gekennzeichnet durch** das Befestigungselement (26), welches als ein wesentlich flexibles, längliches Element ausgebildet ist.

12. Packvorrichtung (10) nach Anspruch 11, **dadurch gekennzeichnet, dass** das Befestigungselement (26) als ein Spanngurt ausgebildet ist.

13. Verpackung (28) mit einer Packvorrichtung (10) nach einem der vorhergehenden Ansprüche.

14. Produkt (30) mit einer Packvorrichtung (10) nach einem der Ansprüche 1 bis 12, mit der Palette (12) und mit der mittels der Packvorrichtung (10) verpackten Ware (14).

15. Verfahren zu einer Verpackung von zumindest einer auf einer Palette (12) angeordneten Ware (14), insbesondere Kommissionierware, für einen Transport der Ware (14), insbesondere mit einer Packvorrichtung (10) nach einem der Ansprüche 1 bist 12, mit zumindest einem Abdeckelement (16), mittels welchem zumindest eine Oberseite (18) der Ware (14) zumindest teilweise abgedeckt und welches an der Palette (12) befestigt wird, **dadurch gekennzeichnet, dass** das Abdeckelement (16) wesentlich flexibel ist und mittels des Abdeckelements (16) zumindest eine Horizontalseite (20) der Ware (14) zumindest teilweise abgedeckt wird.
